Europäisches Patentamt

European Patent Office

Office européen des brevets

(19)

(11) Numéro de publication : **0 408 436 B1**

(12) **FASCICULE DE BREVET EUROPEEN**

(45) Date de publication du fascicule du brevet :
31.03.93 Bulletin 93/13

(51) Int. Cl.⁵ : **H02J 7/24, H02J 7/16**

(21) Numéro de dépôt : **90401973.4**

(22) Date de dépôt : **09.07.90**

(54) **Circuit de détection du signal phase alternateur polyphase de contrôle d'un régulateur de charge de batterie de véhicule automobile et son utilisation.**

(30) Priorité : **11.07.89 FR 8909312**

(43) Date de publication de la demande :
**16.01.91 Bulletin 91/03**

(45) Mention de la délivrance du brevet :
**31.03.93 Bulletin 93/13**

(84) Etats contractants désignés :
**DE ES GB IT SE**

(56) Documents cités :
**EP-A- 0 016 569
EP-A- 0 053 103
EP-A- 0 330 561
US-A- 4 584 515**

(73) Titulaire : **VALEO EQUIPEMENTS
ELECTRIQUES MOTEUR
2, Rue André Boulle
F-94000 Creteil (FR)**

(72) Inventeur : **Pierret, Jean-Marie
24 Rue Sibuet
F-75012 Paris (FR)**
Inventeur : **Michel, Didier
9 rue Pierre de Coubertin
F-94510 La Queue-en-Brie (FR)**

(74) Mandataire : **Martin, Jean-Jacques et al
Cabinet REGIMBEAU 26, Avenue Kléber
F-75116 Paris (FR)**

EP 0 408 436 B1

## Description

Dans les véhicules automobiles, la charge de la batterie est normalement assurée à partir d'un alternateur polyphasé, généralement triphasé, alimentant un pont redresseur à diodes pour engendrer une tension alternateur redressée destinée à assurer la charge de la batterie. Le niveau d'amplitude de la tension alternateur redressée, soit le niveau de tension de charge appliqué à la batterie, est régulé au moyen d'un régulateur lequel assure, à partir de la détection de la tension de phase alternateur, délivrée par l'un des enroulements stator de l'alternateur triphasé, une régulation du courant d'excitation le, en particulier du rapport cyclique de ce dernier, appliqué à l'inducteur de l'alternateur.

Ces types de régulateurs sont parfaitement connus de l'état de la technique et donnent satisfaction dans les conditions normales d'utilisation. Ils sont généralement classés soit selon une première catégorie de régulateurs multifonctions ou selon une deuxième catégorie de régulateurs mono-multifonctions, dits plurifonctions, la particularité de ces derniers étant de pouvoir être utilisés sur des véhicules dont le câblage est prévu soit pour des régulateurs monofonctions, soit pour des régulateurs multifonctions.

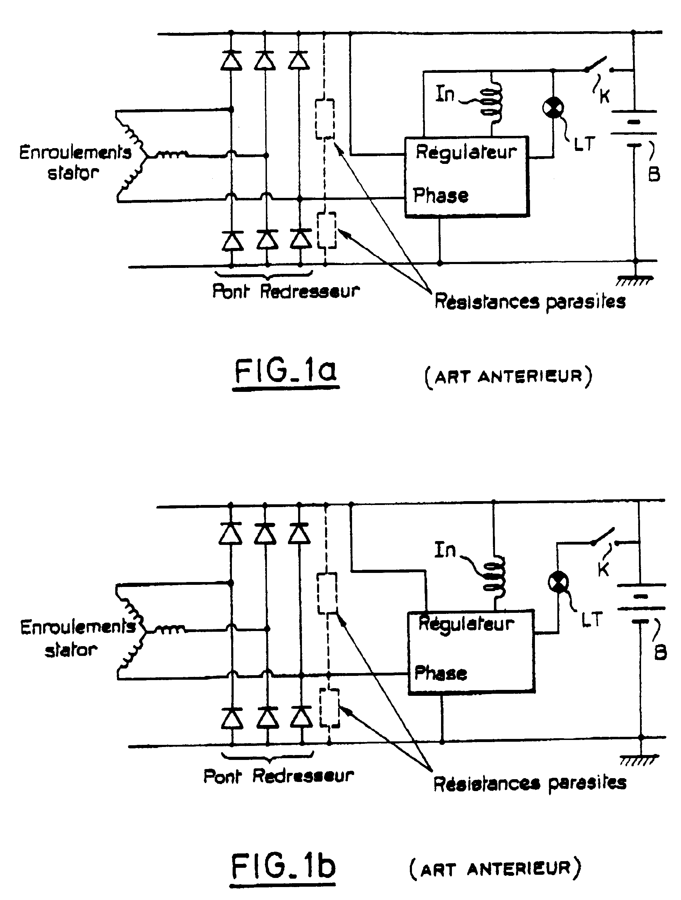

Un schéma de câblage de tels types de régulateurs est donné en figures 1a et 1b. Une différence essentielle entre régulateurs multifonctions et régulateurs plurifonctions, ainsi qu'il apparaît à l'observation des figures précitées, résulte, en ce qui concerne les régulateurs multifonctions, en la nécessité de fermeture de la clef de contact du véhicule pour assurer le fonctionnement de tels régulateurs puisque l'alimentation de l'inducteur de l'alternateur en courant d'excitation est assurée par le circuit de la clef de contact.

Pour une description plus détaillée d'un régulateur de type multifonctions, on pourra se reporter au brevet US 4 584 515 (EDWARDS) délivré le 22 avril 1986 et pour celle d'un régulateur plurifonction à la demande de brevet européen EP-A-330 561 ou à la demande de brevet américain USSN 314 811 introduites dans la présente description à titre de référence.

Quelle que soit la catégorie dans laquelle ces régulateurs sont susceptibles d'être classés, ceux-ci présentent cependant des défauts de fonctionnement provoqués par l'apparition de potentiels ou tensions parasites sur les enroulements de l'alternateur. Ces potentiels ou tensions parasites peuvent être engendrés soit par des équipements du véhicule automobile, tels que par exemple compte-tours directement connectés sur les enroulements stator de l'alternateur polyphasé, soit en présence de défauts d'isolement permettant la formation de résistances parasites et donc de potentiels de polarisation parasites au niveau du pont redresseur et des enroulements du stator, ces résistances pouvant être formées par des ponts salins par exemple. Ces résistances parasites sont représentées en traits mixtes sur les figures 1a et 1b.

Ainsi, les potentiels et résistances parasites précités sont-ils susceptibles de polariser les enroulements du stator de l'alternateur à une valeur correspondant à une rotation de l'alternateur, bien que celui-ci soit à l'arrêt, ce qui peut être interprêté de manière erronée par un régulateur relié de manière classique à un enroulement stator de l'alternateur triphasé.

En outre, lorsque, en période de démarrage du véhicule par exemple, l'alternateur est en rotation, en l'absence de courant d'excitation, il existe en sortie des enroulements stator de l'alternateur une force électromotrice due à la rémanence des circuits magnétiques. Cette force électromotrice normalement détectée par un régulateur classique, tel que représenté en figure 1a ou 1b, permet de discriminer l'état de rotation de l'alternateur polyphasé et d'autoriser l'établissement du courant d'excitation dans l'inducteur de l'alternateur par le régulateur. Les résistances et potentiels parasites précités peuvent alors avoir pour effet de stabiliser la tension de sortie de l'enroulement de phase relié de manière classique au régulateur, ce qui peut être interprêté de manière erronée par ce dernier comme si l'alternateur était à l'arrêt.

Dans le cas des régulateurs multifonctions, un défaut sur la détection de l'amplitude de la tension de phase alternateur a une importance mineure puisque le fonctionnement ou l'arrêt du régulateur, c'est-à-dire de la régulation du courant d'excitation de l'inducteur de l'alternateur, est directement lié à la fermeture ou à l'ouverture de la clef de contact du véhicule, dont l'utilisateur reste totalement maître.

Cependant, même lorsque l'alternateur est à l'arrêt, l'entrée de tension de phase alternateur du régulateur, en présence de résistances parasites, ainsi que représenté en figure 1a, peut être polarisée à une valeur d'amplitude correspondant à une rotation de l'alternateur. Une telle situation peut être gênante notamment dans le cas où l'utilisateur, bien que le véhicule, le moteur du véhicule et l'alternateur soient à l'arrêt, l'utilisateur ferme la clef de contact pour assurer l'alimentation des circuits auxiliaires du véhicule sur la position de parcage par exemple.

Dans le cas des régulateurs plurifonctions, les résistances et potentiels parasites risquent de fournir une information erronée au régulateur avec pour conséquence soit la délivrance d'un courant d'excitation alors que l'alternateur ne tourne pas ou, au contraire, absence d'amorçage du régulateur alors que l'alternateur est en rotation.

La présente invention a pour objet de remédier aux inconvénients précités par la mise en oeuvre d'un circuit de détection du signal phase alternateur polyphasé pour le contrôle d'un régulateur de charge de batterie de véhicule automobile dans lequel un montage symétrique par rapport aux enroulements stator de l'alternateur permet de réduire ou supprimer les tensions parasites engendrées par des équipements auxiliaires du véhicule automobile directement connectés aux enroulements stator de l'alternateur.

Un autre objet de la présente invention est la mise en oeuvre d'un circuit de détection du signal phase alternateur polyphasé pour le contrôle d'un régulateur de charge de batterie de véhicule automobile dans lequel les enroulements stator de l'alternateur, du fait de leur faible valeur d'impédance, permettent de réduire ou supprimer les effets des résistances parasites susceptibles de se former sur le pont redresseur connecté à l'alternateur.

Le circuit de détection du signal phase alternateur polyphasé pour le contrôle d'un régulateur de charge de batterie de véhicule automobile objet de l'invention est remarquable en ce qu'il comporte des moyens de discrimination différentielle de l'amplitude des signaux d'au moins un couple de signaux de phase délivrés par l'alternateur.

Le circuit de détection du signal phase alternateur polyphasé pour le contrôle d'un régulateur de charge de batterie objet de l'invention trouve application à l'industrie automobile pour l'équipement de tout type de régulateurs de charge, multifonctions ou plurifonctions actuellement disponibles dans l'état de la technique.

Le circuit de détection du signal phase alternateur polyphasé pour le contrôle d'un régulateur de charge de batterie de véhicule automobile, selon l'invention, sera mieux compris à la lecture de la description et à l'observation des dessins ci-après dans lesquels, outre les figures 1a et 1b relatives à l'art antérieur,

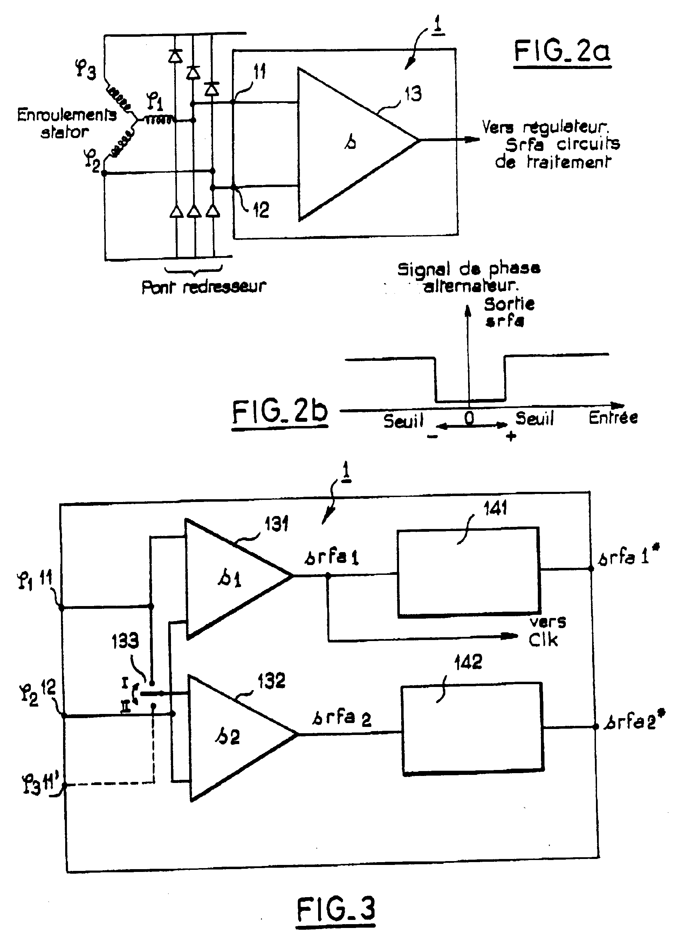

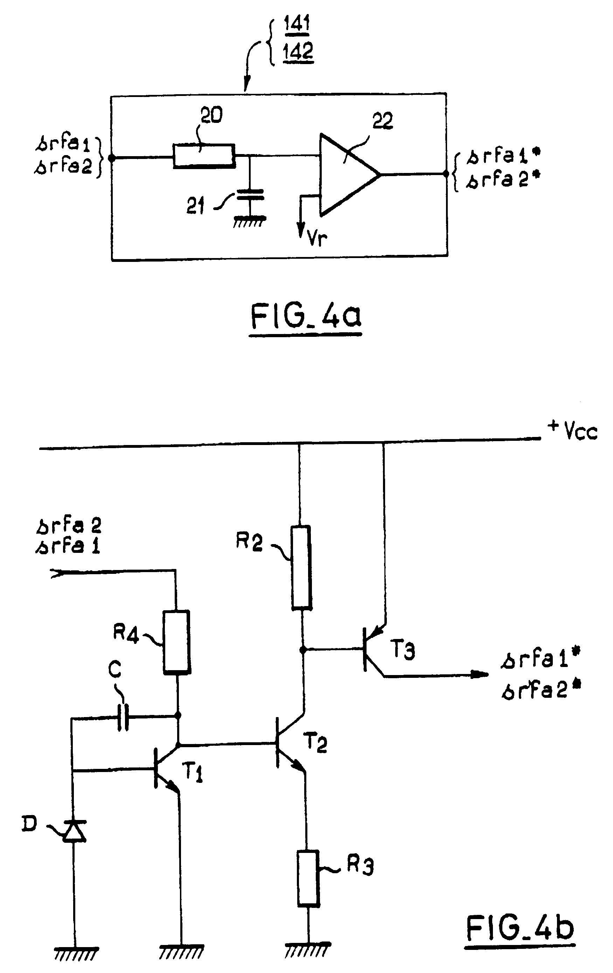

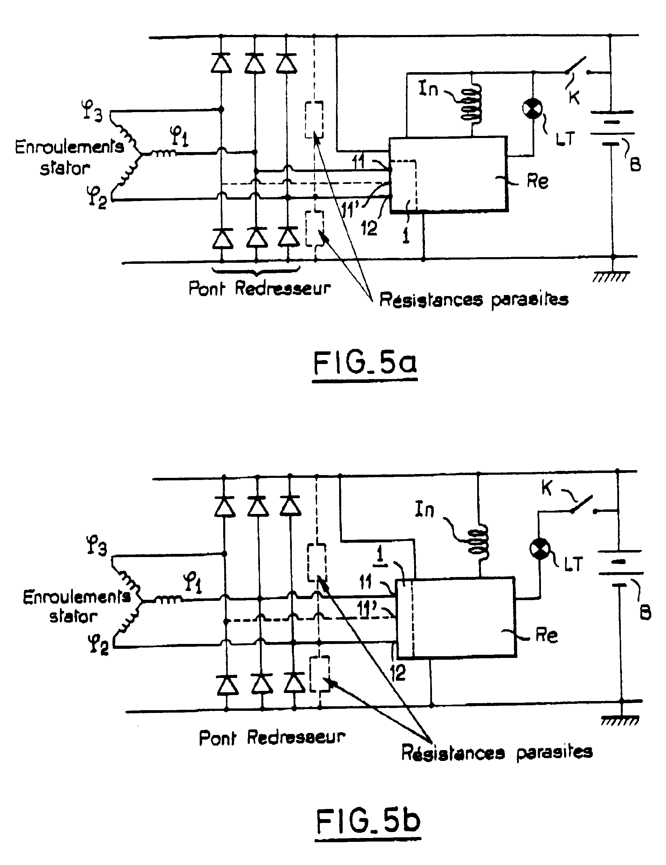

. la figure 2a représente un schéma synoptique général d'un circuit objet de l'invention,
. La figure 2b représente une caractéristique de réponse des moyens de discrimination différentielle,
. la figure 3 représente un mode de réalisation avantageux d'un circuit objet de l'invention,
. la figure 4a représente une première variante d'un détail de réalisation de la figure 3,
. la figure 4b représente une deuxième variante d'un détail de réalisation de la figure 3,
. la figure 5a représente un schéma de câblage complet d'un régulateur multifonction muni d'un circuit de détection du signal phase alternateur polyphasé objet de la présente invention,
. la figure 5b représente un schéma de câblage complet d'un régulateur plurifonction muni d'un circuit de détection du signal phase alternateur objet de la présente invention.

Le circuit de détection du signal phase alternateur polyphasé de contrôle d'un régulateur de charge de batterie de véhicule automobile objet de la présente invention sera tout d'abord décrit en liaison avec les figures 2a et 2b.

Selon la figure 2a précitée, le circuit de détection comporte des moyens 1 de discrimination différentielle de l'amplitude du signal entre au moins un couple de signaux de phase $\phi_1$, $\phi_2$, $\phi_3$ sur la figure 2 délivrés par l'alternateur précité.

Sur la figure 2a, on a représenté, d'une part, les trois enroulements délivrant les signaux de phase $\phi_1$, $\phi_2$, $\phi_3$ à un pont redresseur constitué de manière classique par un jeu de diodes pour chacune des phases précitées.

Ainsi qu'on l'a en outre représenté en figure 2a, le circuit de détection comporte, en outre, au moins deux bornes d'entrée 11, 12 auxquelles sont interconnectées respectivement une première phase $\phi_1$ et une deuxième phase $\phi_2$ de l'alternateur polyphasé, ces entrées recevant ainsi chacune un signal phase alternateur $\phi_1$, $\phi_2$. En outre, le circuit de détection selon l'invention comporte des moyens comparateurs à seuil 13 permettant d'engendrer pour une amplitude différentielle de signal phase alternateur $\phi_1 - \phi_2$ supérieure à une valeur de seuil s déterminée un signal srfa représentatif du régime de fonctionnement alternateur.

De manière classique, les moyens comparateurs à seuil 13 peuvent être constitués par un amplificateur de type amplificateur différentiel.

On comprendra, bien entendu, que de par la symétrie du montage représenté en figure 2a et, en particulier, de par la symétrie des tensions phase alternateur entrant sur les bornes d'entrée 11 et 12 du circuit représentées en figure 2, toute perturbation ou tension de polarisation parasite présente sur les phases peut ainsi être éliminée ou sensiblement réduite du fait de la discrimination différentielle entre le couple de phases $\phi_1$ et $\phi_2$ précité.

La figure 2b représente une caractéristique de réponse des moyens 1 de discrimination différentielle. Sur la figure 2b, le signal srfa est au niveau o lorsque l'amplitude différentielle de signal phase $\phi1-\phi2$ est inférieure à la valeur de seuil S, et au niveau 1 lorsque l'amplitude différentielle de signal phase est supérieure à la valeur de seuil S.

Une première variante de réalisation avantageuse du circuit de détection objet de l'invention sera donnée en liaison avec la figure 3.

Selon la figure 3 précitée, le circuit de détection, objet de l'invention, comporte avantageusement un premier 131 moyen comparateur à seuil. Ce premier moyen comparateur à seuil comporte une première valeur de seuil s1 inférieure ou égale par exemple à 1/20 de la tension nominale de charge de batterie. A titre d'exemple non limitatif, pour un véhicule automobile de type classique dont la tension nominale de charge de batterie est de 12 Volts, la valeur du seuil s1 peut être prise égale à 0,6 Volt. Ce premier comparateur 131 permet d'engendrer un premier signal srfa1

représentatif du régime de fonctionnement alternateur correspondant à une vitesse de rotation alternateur voisine de 1500 tours/minute en l'absence de courant d'excitation alternateur.

En outre, ainsi qu'on l'a représenté sur la même figure 3, le circuit de détection selon l'invention comporte un deuxième moyen comparateur à seuil 132 comportant une deuxième valeur de seuil s2 inférieure ou égale par exemple à 1/2 de la tension nominale de charge de batterie. Dans le même cas que précédemment d'un véhicule automobile dont la tension de charge nominale de batterie est de 12 Volts, la valeur du seuil s2 peut être prise égale à 6 ou 7 Volts. Ce deuxième comparateur 132 permet d'engendrer un deuxième signal représentatif du régime de fonctionnement alternateur srfa2 correspondant à un régime de rerégulation de la tension de phase alternateur.

On comprendra, bien entendu, que dans le mode de réalisation de la figure 3, le circuit de détection objet de l'invention permet, d'une part, sur déclenchement du premier comparateur à seuil 131, c'est-à-dire lorsque la tension entre phase $\phi_1$ et $\phi_2$ devient supérieure à 0,6 Volt sensiblement, d'engendrer un signal srfa1 témoignant de la vitesse de rotation alternateur acquise en l'absence de courant d'excitation. Ce signal peut, de manière avantageuse, être utilisé comme signal de commande synchrone du régulateur, ainsi qu'il a déjà été décrit de manière détaillée dans les demandes de brevet américain et européen citées précédemment dans la description.

Le deuxième moyen comparateur à seuil 132 permet, lorsque la tension entre phase alternateur $\phi_1$, $\phi_2$ atteint la valeur de seuil s2 prise égale par exemple à 7 Volts, d'engendrer le deuxième signal représentatif du régime de fonctionnement alternateur srfa2 lors, par exemple, de la diminution de la tension de phase alternateur engendrée par ce dernier, suite à un délestage de la charge par exemple, d'une étape de rerégulation de tension de phase pouvant alors être commandée par le régulateur de façon à obtenir une tension de phase alternateur avoisinant à nouveau la valeur de tension nominale de charge de batterie. Cette régulation est bien entendu, de manière classique, effectuée par la commande du rapport cyclique du courant d'excitation de l'alternateur.

Selon un mode de réalisation particulièrement avantageux du circuit de détection objet de l'invention, ainsi que représenté en figure 3, les premier et deuxième moyens comparateurs à seuil 131 et 132 sont suivis respectivement d'un circuit 141, 142 discriminateur du rapport cyclique du signal représentatif du régime de fonctionnement alternateur.

Bien entendu, ainsi qu'on le remarquera à l'observation de la figure 3, le premier circuit discriminateur du rapport cyclique 141 reçoit le premier signal représentatif du régime de fonctionnement alternateur srfa1, alors que le deuxième circuit discriminateur du rapport cyclique 142 reçoit le deuxième signal représentatif du régime de fonctionnement alternateur srfa2.

Selon un aspect particulièrement avantageux du mode de réalisation représenté en figure 3, le circuit discriminateur du rapport cyclique 141 ou 142 constitue pour le signal représentatif du régime de fonctionnement alternateur srfa1 ou srfa2 un filtre passe-bas éliminateur des transitoires de commutation par rapport à une valeur de référence de seuil de rapport cyclique. Ainsi, pour une valeur faible du rapport cyclique correspondant à des impulsions de faible durée sur la période correspondante, en fonction du régime alternateur, les circuits précités permettent d'éliminer les impulsions ou transitoires de commutation, lesquels correspondent également à des impulsions de très faible durée.

Sur la figure 3, on a représenté un mode de connexion particulièrement avantageux des premier et deuxième moyens comparateurs 131 et 132 à partir de trois entrées 11, 12 et 11' des signaux de phase alternateur $\phi_1$, $\phi_2$, $\phi_3$.

Ainsi, les deux entrées du premier moyen comparateur 131 peuvent être connectées aux bornes 11 et 12 précédemment décrites recevant les signaux de phase $\phi_1$ et $\phi_2$, alors que les deux entrées du deuxième moyen comparateur 132 peuvent être connectées respectivement l'une à la borne 12 recevant le signal de phase $\phi_2$ et l'autre soit à la borne 11 recevant le signal de phase $\phi_1$, soit à la borne 11' recevant le signal de phase $\phi_3$ par l'intermédiaire d'un moyen basculeur 133 susceptible d'occuper deux positions de commutation notées I et II sur la figure 3.

On comprendra, bien entendu, que, en position de commutation I des moyens basculeurs 133, les premier et deuxième moyens comparateurs 131, 132 sont interconnectés tous deux aux bornes 11 et 12 et reçoivent ainsi les deux signaux de phase $\phi_1$ et $\phi_2$. Au contraire, en position de commutation II, le basculeur 133 permet la connexion du deuxième moyen comparateur 132 entre la borne 12 et la borne 11', ce deuxième moyen comparateur 132 recevant ainsi les signaux de phase $\phi_2$ et $\phi_3$.

Il est ainsi possible, en fonction de la position de commutation du basculeur 133, d'assurer, conformément à l'objet de l'invention, une discrimination différentielle d'un seul couple de phases $\phi_1$ ou $\phi_2$ ou de deux couples de phases $\phi_1$ - $\phi_2$ ou $\phi_2$ - $\phi_3$.

On notera, bien entendu, que, en l'absence de rotation de l'alternateur, les enroulements des deux phases connectés ainsi en série entre les entrées des moyens comparateurs, tels que les premier moyen comparateur 131 ou deuxième moyen comparateur 132 constituent en fait un circuit d'impédance très faible de l'ordre de 200 m $\Omega$ (milliohms), ce qui permet d'éliminer par court circuit les signaux ou polarisations parasites appliquées sur les entrées des moyens comparateurs.

On comprendra bien sûr que le montage symétrique des entrées de la tension de phase alternateur sur les comparateurs, en raison du montage symétrique des enroulements de phase alternateur, permet également en cas d'existence de tensions parasites sensiblement de même valeur sur chaque phase de réduire ainsi l'effet de ces tensions parasites en raison de la détection différentielle précitée.

Une description plus détaillée d'un circuit discriminateur de rapport cyclique sera donnée en liaison avec la figure 4a.

Ainsi qu'on l'a représenté sur cette figure, chaque circuit discriminateur de rapport cyclique 141 ou 142 peut comporter avantageusement en cascade un circuit de type intégrateur 20, 21 à grande constante de temps.

Sur la figure 4a, on a représenté de manière symbolique le circuit intégrateur précité constitué par une résistance 20 et une capacité 21. Bien entendu, les valeurs relatives de cette résistance 20 et de cette capacité 21 sont choisies suffisamment grandes pour obtenir une constante de temps correspondante importante par rapport à la durée des transitoires de commutation et des impulsions correspondantes pour les impulsions de faible durée. Le circuit intégrateur précité reçoit sur sa borne d'entrée le signal représentatif du régime de fonctionnement alternateur, c'est-à-dire pour le circuit discriminateur de rapport cyclique 141, respectivement 142, les signaux srfa1, srfa2 respectivement délivrés par les premier et deuxième moyens comparateurs 131 et 132 après mise en forme. Le circuit de type intégrateur délivre un signal intégré.

En outre, le circuit discriminateur de rapport cyclique comporte également un comparateur à seuil 22 recevant sur une première entrée le signal intégré précité délivré par le circuit de type intégrateur et sur une deuxième entrée une valeur de référence Vr de tension représentative de la valeur de référence de seuil de rapport cyclique.

A titre d'exemple non limitatif, la valeur de référence Vr de tension peut être prise égale à une valeur correspondant à un rapport cyclique de 50 %.

Selon une caractéristique avantageuse du circuit de type intégrateur à grande constante de temps, celui-ci peut être constitué par un intégrateur de Miller.

Un mode de réalisation plus complet du circuit discriminateur de rapport cyclique, tel que 141 ou 142, sera décrit en liaison avec la figure 4b.

Ainsi que représenté sur cette figure, le circuit de type intégrateur 20, 21 peut être constitué par un intégrateur de Miller, ainsi que mentionné précédemment . Celui-ci comprend de manière avantageuse un transistor constituant circuit actif T1 de type NPN par exemple. Ce transistor a son électrode d'émetteur connectée à la tension de référence du dispositif, tension de masse, et son électrode de collecteur reliée par l'intermédiaire d'une résistance R4 à la borne d'entrée recevant le signal srfa1 ou srfa2. L'électrode de base du transistor T1 est reliée par l'intermédiaire d'une diode D dont l'anode est reliée à la tension de masse et la cathode à l'électrode de base du transistor, cette même électrode de base du transistor étant reliée à l'électrode de collecteur de celui-ci par l'intermédiaire d'une capacité C.

Bien entendu, ainsi que décrit et mentionné précédemment, le signal srfa1 ou srfa2 sont les signaux délivrés par les premier ou deuxième moyens comparateurs après mise en forme. La constante de temps du circuit intégrateur ainsi obtenue par la mise en oeuvre du transistor T1, de la résistance R, et de la capacité C et de la diode D s'écrit :

$$\tau = R \times A \times C$$

où R et C désignent les valeurs de la résistance R et de la capacité C et où A représente le gain du transistor T1 monté en émetteur commun.

En présence de signaux représentatifs du fonctionnement alternateur srfa1 ou srfa2 de faible rapport cyclique par rapport à la constante de temps $\gamma$, la capacité C ne peut se charger et le signal précité correspondant n'est pas transmis. Au contraire, pour une valeur de rapport cyclique plus importante, c'est-à-dire pour une valeur de rapport cyclique $\rho$ de l'ordre de 50 %, la capacité C peut alors se charger et le signal représentatif du fonctionnement alternateur srfa1 ou srfa2 peut alors être transmis vers le circuit comparateur 22.

Sur la figure 4b, on a également représenté un mode de réalisation avantageux particulier de ce même comparateur 22, lequel peut être réalisé par l'intermédiaire de deux transistors T2 et T3.

Ainsi que représenté sur la figure 4b précitée, le comparateur à seuil 22 peut comprendre un premier transistor à seuil de polarisation par résistance d'émetteur, ce transistor étant noté T2 et la résistance d'émetteur étant noté R3. L'électrode de collecteur du transistor T2, lequel peut avantageusement être un transistor de type NPN comme le transistor T1, est reliée à la tension d'alimentation +VCC par l'intermédiaire d'une résistance de polarisation R2. Un transistor de sortie T3 complémenté vis-à-vis du premier ou du deuxième transistor T1 ou T2, le transistor T3 étant alors un transistor de type PNP, assure la fonction d'étage de sortie, la base du transistor T3 étant reliée au collecteur du transistor T2, l'émetteur de celui-ci étant directement relié à la tension de polarisation +VCC et le collecteur du transistor T3 permettant de délivrer le signal srfa1* ou srfa2* et correspondant au signal filtré ou discriminé en valeur de rapport cyclique.

De préférence, les transistors T1 et T2 seront choisis de façon à présenter un même gain.

On notera que le mode de réalisation de la figure 4b relativement au circuit intégrateur et au circuit comparateur 22 est particulièrement avantageux dans la mesure où ce mode de réalisation permet d'envisager une intégration totale du circuit, objet de l'invention, sur la même puce que les circuits du régulateur.

On a ainsi décrit un circuit de détection du signal phase alternateur polyphasé de contrôle d'un régulateur de charge de batterie de véhicule automobile particulièrement avantageux.

A titre d'exemple non limitatif, un régulateur monofonction de type classique ne s'amorce que lorsque la différence de tension entre les phases alternateur est égale à trois tensions de jonction de diode, soit 1,8 Volt environ. Ce seuil d'amorçage est important, ce qui impose de préexciter l'inducteur pour amorcer le régulateur aux faibles vitesses de rotation de l'alternateur ainsi que requis par les constructeurs de véhicules automobiles.

Pour un régulateur monofonction, ce courant de préexcitation est fourni par la lampe de signalisation de défauts ou lampe témoin LT. Si cette lampe est défectueuse, par exemple lorsque le filament est coupé, le courant de préexcitation n'existe pas et l'amorçage ne dépend que de la rémanence des circuits magnétiques de l'alternateur. Les vitesses d'amorçage de ce dernier sont alors très élevées et non acceptables pour les constructeurs de véhicules automobiles.

Dans le cas de régulateurs plurifonctions ou régulateurs mono-multifonctions, le seuil de détection de la rotation de l'alternateur peut être choisi avec une valeur beaucoup plus faible, un seuil égal à une seule tension de jonction, soit 0,6 Volt, pouvant être choisi. La rémanence du circuit magnétique de l'alternateur est alors suffisante pour provoquer l'amorçage du régulateur aux faibles vitesses de rotation de l'alternateur acceptables par les constructeurs de véhicules automobiles.

Bien entendu, le circuit de détection du signal phase alternateur polyphasé de contrôle d'un régulateur de charge de batterie du véhicule automobile, selon l'invention, peut être utilisé soit en liaison avec des régulateurs de type multifonction, ainsi que représenté en figure 5a, soit en liaison avec des régulateurs de type plurifonction, ainsi que représenté en figure 5b.

Dans les deux cas, les régulateurs précités, dans lesquels un circuit de détection du signal phase alternateur polyphasé de contrôle d'un régulateur de charge de batterie de véhicule automobile, selon l'invention, est incorporé, ne se distinguent des régulateurs de l'art antérieur dans leur aspect que par le nombre d'entrées de signal phase, lequel, au lieu de l'entrée unique des régulateurs de l'art antérieur, peut comporter deux ou trois entrées auxquelles un ou deux couples d'enroulements alternateurs sont connectés de façon à délivrer un ou deux couples de signaux de phase alternateur pour assurer la discrimination différentielle, ainsi que représenté en figure 2 ou 3 et décrit précédemment dans la description.

## Revendications

1. Circuit de détection du signal phase alternateur polyphasé de contrôle d'un régulateur de charge de batterie de véhicule automobile, caractérisé en ce que ledit circuit comporte des moyens (1) de discrimination différentielle de l'amplitude des signaux d'au moins un couple ($\phi_1$, $\phi_2$) de signaux de phase délivrés par ledit alternateur.

2. Circuit selon la revendication 1, caractérisé en ce qu'il comporte au moins :
   - deux bornes d'entrée (11, 12), auxquelles sont interconnectées respectivement une première et une deuxième phase dudit alternateur polyphasé et recevant chacune un signal phase alternateur ($\phi_1$, $\phi_2$),
   - des moyens comparateurs à seuil (13) permettant d'engendrer pour une amplitude différentielle de signal phase alternateur ($\phi_1$, $\phi_2$) supérieure à une valeur de seuil (s) déterminée un signal (srfa) représentatif du régime de fonctionnement alternateur.

3. Circuit selon la revendication 2, caractérisé en ce que lesdits moyens comparateurs à seuil (13) sont constitués par un amplificateur différentiel.

4. Circuit selon l'une des revendications 2 ou 3, caractérisé en ce qu'il comporte :
   - un premier (131) moyen comparateur à seuil, le premier moyen comparateur à seuil comportant une première valeur de seuil (s1) inférieure ou égale à 1/20 de la tension nominale de charge de batterie permettant d'engendrer un premier signal représentatif du régime de fonctionnement alternateur (srfa1) correspondant à une vitesse de rotation alternateur voisine de 1500 t/mn en l'absence de courant d'excitation alternateur ;
   - un deuxième (132) moyen comparateur à seuil comportant une deuxième valeur de seuil (s2) inférieure ou égale à 1/2 de la tension nominale de charge de batterie permettant d'engendrer un deuxième signal représentatif du régime de fonctionnement alternateur (srfa2) correspondant à un régime de rerégulation de la tension de phase alternateur.

5. Circuit selon la revendication 4, caractérisé en ce que lesdits premier et deuxième moyens comparateurs à seuil (131, 132) sont suivis respectivement d'un circuit (141, 142) discriminateur du rapport cyclique dudit signal représentatif du régime de fonctionnement alternateur.

**6.** Circuit selon la revendication 5, caractérisé en ce que ledit circuit discriminateur de rapport cyclique (141, 142) constitue pour ledit signal représentatif du régime de fonctionnement alternateur un filtre passe-bas éliminateur des transitoires de commutation par rapport à une valeur de référence de seuil de rapport cyclique.

**7.** Circuit selon la revendication l'une des revendications 5 ou 6, caractérisé en ce que ledit circuit discriminateur de rapport cyclique comporte en cascade :
- un circuit de type intégrateur (20, 21) à grande constante de temps recevant sur sa borne d'entrée ledit signal représentatif du régime de fonctionnement alternateur après mise en forme, et délivrant un signal intégré,
- un comparateur à seuil (22) recevant sur une première entrée le signal intégré délivré par ledit circuit de type intégrateur, et sur une deuxième entrée une valeur de référence de tension représentative de ladite valeur de référence de seuil de rapport cyclique.

**8.** Circuit selon la revendication 7, caractérisé en ce que ledit circuit de type intégrateur est un intégrateur de Miller.

**9.** Circuit selon la revendication 7 ou 8, caractérisé en ce que ledit comparateur à seuil comprend :
- un premier transistor (T2) à seuil de polarisation par résistance d'émetteur (R3) ledit seuil de polarisation définissant ladite valeur de référence de seuil de rapport cyclique, ledit premier transistor (T2) recevant sur son électrode de base, ledit signal intégré ;
- un deuxième transistor (T3) de type complémenté vis-à-vis dudit premier transistor (T2) et constituant étage de sortie pour ledit comparateur et dont l'électrode de base est connectée à l'électrode de collecteur dudit premier transistor (T2).

## Claims

**1.** A detector circuit for detecting a phase signal of a polyphase alternator for a battery charge regulator in a motor vehicle, characterized in that said circuit includes differential signal amplitude discriminator means (1) for discriminating signals of least one pair ($\phi_1$, $\phi_2$) of phase signals delivered by said alternator.

**2.** A circuit according to claim 1, characterized in that it includes at least:
two input terminals (11, 12) connected respectively to a first and to a second phase of said polyphase alternator, each receiving an alternator phase signal($\phi_1$, $\phi_2$),
threshold comparator means (13) for generating a signal (srfa) representative of alternator operating conditions when the alternator phase ($\phi_1$, $\phi_2$) amplitude differential exceeds a determined threshold value (s).

**3.** A circuit according to claim 2, characterized in that said threshold comparison means (13) are constituted by a differential amplifier.

**4.** A circuit according to claim 2 or 3, characterized in that it includes:
a first treshold comparator means (131), including a first threshold value (s1) no greater than 1/20-th of the nominal charge voltage of the battery enabling a first signal (srfa1) representative of alternator operating conditions to be generated when the alternator is rotating at about 1500 rpm in the absence of alternator excitation current; and
a second threshold comparator means (132) including a second threshold value (s2) no greater than 1/2 of the nominal battery charge voltage enabling a second signal (srfa2) representative of alternator operating conditions to be generated corresponding to alternator phase voltage reregulation conditions.

**5.** A circuit according to claim 4, characterized in that said first and second threshold comparator means (131, 132) are followed by respective duty ratio discriminator circuits (141, 142) responsive to the duty ratio in each of the signals representative of alternator operating conditions.

**6.** A circuit according to claim 5, characterized in that said duty ratio discriminator circuit (141, 142) for said signal representative of alternator operating conditions constitutes a lowpass filter eliminating switching transients relative to a duty ratio threshold reference value.

**7.** A circuit according to claim 5 or 6, characterized in that each of said duty ratio discriminator circuits comprises a series connection of:
an integrator type circuit (20, 21) having a long time constant and receiving on an input terminal a shaped version of said signal representative of alternator operating conditions, and delivering an integrated signal; and
a threshold comparator (22) having a first input receiving the integrated signal delivered by said integrator type circuit, and a second input receiving a voltage reference value representative of said duty reference threshold reference value.

8. A circuit according to claim 7, characterized in that said integrator type circuit is a Miller integrator.

9. A circuit according to claim 7 or 8, characterized in that said threshold comparator comprises: a first transistor ($T_2$), having a bias threshold set by an emitter resistance ($R_3$),said bias threshold defining said duty ratio threshold reference value, said first transistor ($T_2$) receiving said integrated signal on its base electrode; and a second transistor ($T_3$), of complementary type relative to said first transistor ($T_2$)and constituting an output stage for said comparator, having its base electrode connected to the collector electrode of said first transistor ($T_2$).

**Patentansprüche**

1. Detektionsschaltung für ein Drehstromgenerator-Überwachungssignal eines Reglers zum Laden der Batterie eines Kraftfahrzeuges, **dadurch gekennzeichnet,** daß die genante Schaltung Mittel (1) zur Differentialtrennung der Amplitude der Signale von wenigstens einem Paar ($\phi_1$, $\phi_2$) Phasensignalen enthält, die vom genannten Generator geliefert werden.

2. Schaltung nach Anspruch 1, **dadurch gekennzeichnet**, daß sie wenigstens folgendes einschließt:
   - Zwei Eingangsklemmen (11, 12), an die eine erste bzw. eine zweite Phase des genannten Mehrphasengenerators angeschlossen sind und die jeweils ein Generator-Phasensignal ($\phi_1$, $\phi_2$) enthalten.
   - Schwellwertkomparatormittel (13), die es erlauben, für eine Differentialamplitude eines Generatorphasensignals ($\phi_1$, $\phi_2$), die über einem festgelegten Schwellwert (s) liegt, ein für den Generator-Betriebsbereich repräsentatives Signal (srfa) zu erzeugen.

3. Schaltung nach Anspruch 2, **dadurch gekennzeichnet**, daß die gennanten Schwellwertkomparatormittel (13) aus einem Differentialverstärker bestehen.

4. Schaltung nach einem der Ansprüche 2 oder 3, **dadurch gekennzeichnet**, daß sie folgendes enthält:
   - Ein erstes Schwellwertkomparatormittel (131), wobei das erste Schwellwertkomparatormittel einen ersten Schwellwert (s1) enthält, der höchstens 1/20 der Nennspannung zum Laden der Batterie entspricht, wodurch es möglich wird, ein erstes Signal zu erzeugen, welches für den Generator-Betriebsbereich repräsentativ ist (srfa1), entsprechend einer Generator-Drehzahl in der Größenordnung von 1500 min$^{-1}$ in Abwesenheit eines Generator-Erregerstroms.
   - Ein zweites Schwellwertkomparatormittel (132) mit einem zweiten Schwellwert (s2), der höchstens 1/2 der Nennspannung zum Laden der Batterie entspricht, wodurch es möglich wird, ein zweites Signal zu erzeugen, welches für den Generator-Betriebsbereich repräsentativ ist (srfa2), entsprechend einem Nachregelbereich für die Generator-Phasenspannung.

5. Schaltung nach Anspruch 4, **dadurch gekennzeichnet,** daß auf die genannten ersten und zweiten Schwellwertkomparatormittel (131, 132) jeweils eine Diskriminatorschaltung (141, 142) für die Trennung des zyklischen Verhältnisses vom genannten, für den Generator-Betriebsbereich repräsentativen Signal folgt.

6. Schaltung nach Anspruch 5, **dadurch gekennzeichnet,** daß die gennante Diskriminatorschaltung für das zyklische Verhältnis (141, 142) für das genannte, für den Generator-Betriebsbereich repräsentative Signal ein Tiefpaßfilter bildet, welches Umschalteinschwingungen im Verhältnis zu einem Bezugsschwellwert mit zyklischem Verhältnis beseitigt.

7. Schaltung nach einem der Ansprüche 5 oder 6, **dadurch gekennzeichnet,** daß die sogenannte Diskriminatorschaltung mit zyklischem Verhältnis in Kaskadenschaltung folgendes aufweist:
   - Eine Integrationsschaltung (20, 21) mit großer Zeitkonstante, die an der Eingangsklemme das genannte repräsentative Signal für den Generator-Betriebsbereich nach Formgebung empfingt und ein integriertes Signal liefert,
   - einen Schwellwertkomparator (22), der über einen ersten Eingang das von der genannten Integrationsschaltung gelieferte integrierte Signal und über einen zeiten Eingang einen Spannungsbezugswert empfängt, der für den genannten Schwellenbezugswert mit zyklischem Verhältnis repräsentativ ist.

8. Schaltung nach Anspruch 7, **dadurch gekennzeichnet,** daß die gennante Integrationsschaltung ein Miller-Integrator ist.

9. Schaltung nach Anspruch 7 oder 8, **dadurch ge-kennzeichnet**, daß der genannte Schwellwert-komparator folgendes enthält:

- einen ersten Transistor (T2) mit Polarisationsschwelle mittels Emitterwiderstand (R3), wobei die genannte Polarisations-schwelle den genannten Schwellenbezugs-wert mit zyklischem Verhältnis definiert und der genannte erste Transistor (T2) an seiner Basiselektrode das genannte integrierte Signal empfängt,

- einen zweiten Transistor (T3) als Ergänzung zum genannten ersten Transistor (T2), der als Ausgangsstufe für den genannten Komparator dient und dessen Basiselektrode an die Kollektorelektrode des genannten ersten Transistors (T2) angeschlossen ist.

## FIG_1a  (ART ANTERIEUR)

## FIG_1b  (ART ANTERIEUR)

FIG. 2a

$\varphi_3$

$\varphi_1$

Enroulements
stator

$\varphi_2$

11

13

b

12

Vers régulateur.
Srfa circuits
de traitement

Pont redresseur

Signal de phase
alternateur.

Sortie
srfa

FIG. 2b

Seuil −   0   Seuil +   Entrée

131

141

$\varphi_1$ 11

b1

srfa 1

srfa 1*

133

I

II

$\varphi_2$ 12

b2

132

srfa 2

142

srfa 2*

$\varphi_3$ 11'

vers
Clk

FIG. 3

$$\underline{141}$$
$$\underline{142}$$

FIG. 4a

FIG. 4b

FIG.5a

FIG.5b